(19) Europäisches Patentamt
European Patent Office
Office européen des brevets

(11) **EP 3 159 556 B1**

(12) **FASCICULE DE BREVET EUROPEEN**

(45) Date de publication et mention
de la délivrance du brevet:
**29.08.2018 Bulletin 2018/35**

(51) Int Cl.:
***F16B 41/00*** *(2006.01)*  ***F16B 43/00*** *(2006.01)*
*F16B 37/00* *(2006.01)*

(21) Numéro de dépôt: **16195114.0**

(22) Date de dépôt: **21.10.2016**

(54) **ECROU ETANCHE**

ABDICHTENDE MUTTER

SEALED NUT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **22.10.2015 FR 1560075**

(43) Date de publication de la demande:
**26.04.2017 Bulletin 2017/17**

(73) Titulaire: **LISI Aerospace**
**75583 Paris Cedex 12 (FR)**

(72) Inventeurs:
• **GOYER, Julien**
**95210 Saint Gratien (FR)**
• **VILLET, Antoine**
**95800 Cergy (FR)**
• **NARETTO, Nicolas**
**Redondo Beach, CA 90277 (US)**

(74) Mandataire: **Ipside**
**7-9 Allées Haussmann**
**33300 Bordeaux Cedex (FR)**

(56) Documents cités:
EP-A1- 2 682 615     WO-A1-2014/087108
US-A- 3 316 952      US-A- 5 454 675
US-A1- 2014 086 702

## Description

La présente invention concerne de manière générale les écrous étanches, et plus particulièrement les écrous comportant une bague d'étanchéité.

Les écrous étanches (voir par exemple le document EP 2 682 615 A) sont utilisés dans l'industrie aéronautique pour assembler des éléments de structure au travers desquels est inséré une vis ou un composant analogue comprenant un filetage extérieur, lesdits éléments nécessitant un assemblage étanche aux fluides et aux vapeurs.

Lorsqu'il faut assembler des éléments de structure qui travaillent principalement en cisaillement, en traction ou dans une combinaison des deux, on utilise des vis présentant une partie de fût lisse, cylindrique ou conique, ayant une longueur permettant de traverser complètement une plage d'épaisseur des éléments à assembler. La longueur du fût permet d'assembler des épaisseurs variant entre une épaisseur minimale (« grip min ») et une épaisseur maximale (« grip max »), la différence étant généralement de 1,6 mm (1/16" de pouce en système impérial). La plage d'épaisseur est appelée en terminologie anglosaxonne « grip capacity ».

La portion cylindrique ou conique du fût de la vis utilisée dépasse donc de la longueur de cette plage lorsque la vis traverse des éléments présentant l'épaisseur minimale que peut assembler la vis. A l'opposé, la portion cylindrique ou conique ne dépasse pas lorsque la vis traverse des éléments présentant l'épaisseur maximale que peut assembler la vis.

Par ailleurs, les vis de cisaillement comprennent généralement un fût ayant un diamètre extérieur supérieur au diamètre extérieur maximal du filetage.

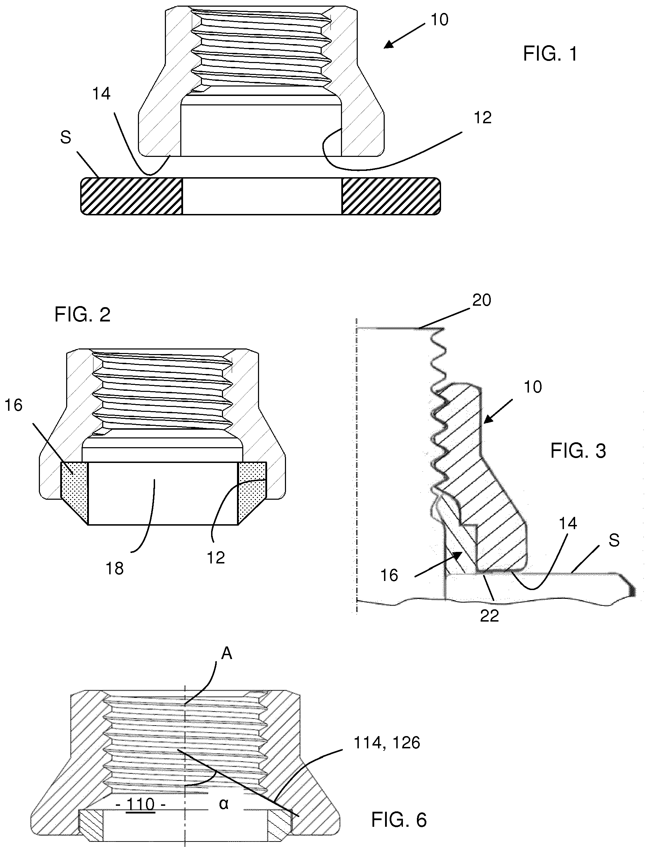

Pour assembler les éléments de structure, il est donc nécessaire d'utiliser conjointement avec une vis de cisaillement ou de traction un écrou 10 représenté en figure 1 comprenant un espace 12 réalisé dans la surface d'appui 14 destinée à entrer en contact avec une surface S d'un des éléments à serrer. Cet espace, réalisé entre la surface d'appui 14 et le premier filet de l'écrou, est appelé classiquement une chambre, et peut présenter diverses formes et dimensions. Dans l'exemple donné ci-dessus, la chambre peut recevoir jusqu'à 1,6 mm du fût de la vis qui peut dépasser de la structure ayant une épaisseur minimale.

Dans certains cas, ces écrous doivent être également étanches. Un tel écrou est représenté en figure 2. Une bague d'étanchéité 16 déformable, généralement en Téflon®, est disposée dans un alésage 18, réalisé dans la chambre 12. La bague 16 a un diamètre intérieur supérieur au diamètre du taraudage et du diamètre du fût lisse afin de ne pas interférer avec la vis. La bague est montée en interférence dans l'alésage 18 pour assurer sa tenue dans l'écrou lors de son transport.

La bague d'étanchéité a une forme conique qui dépasse généralement de la surface d'appui de l'écrou. Ainsi, lorsque l'écrou est serré contre un élément de structure, la bague d'étanchéité est à la fois axialement comprimée et déformée radialement vers l'intérieur de la chambre et contre le fût et/ou les filets de la vis, formant ainsi un joint étanche.

Le demandeur a remarqué que dans certaines configurations d'assemblage comprenant une vis 20 et un écrou 10 étanche représentés en figure 3, la bague 16 ne fluait pas entièrement dans la chambre 12 mais fluait en partie 22 entre la surface d'appui 14 de l'écrou et la surface S de l'élément à serrer. Cela peut se produire quand la vis est installée dans une structure présentant une épaisseur minimale et que toute la longueur de fût dépassant de la structure se trouve dans la chambre.

Un tel fluage doit être totalement prévenu, puisqu'il compromet gravement la tenue mécanique de l'assemblage vis /écrou. En effet, la présence d'une matière lubrifiante entre la surface d'appui de l'écrou et la surface de l'élément à serrer influe sur le coefficient de frottement entre ces surfaces. Lorsque le coefficient de frottement diminue, la tension de la vis augmente au-dessus du seuil admissible par la vis, ce qui peut provoquer la rupture de la vis.

La présente invention concerne un écrou étanche qui évite un fluage de la bague d'étanchéité entre l'écrou et la structure, quelle que soit la configuration d'assemblage, sans réduire la résistance, la capacité ou l'intégrité structurelle de l'assemblage ou des composants de l'assemblage.

Plus précisément, l'écrou étanche comporte un écrou et une bague d'étanchéité déformable, l'écrou comportant un corps annulaire s'étendant dans une direction d'un axe de révolution, une embase comportant une chambre et un alésage réalisé dans l'embase, l'alésage comprenant une paroi de fond annulaire ayant une largeur s'étendant entre un premier rayon intérieur et un deuxième rayon. La bague d'étanchéité comprend un corps annulaire et une face d'extrémité apte à reposer contre la paroi de fond, la face d'extrémité ayant une largeur s'étendant entre un rayon intérieur et un rayon extérieur. L'écrou étanche est tel que le rapport de la largeur de la paroi de fond de l'alésage et la longueur de la face d'extrémité de la bague est compris entre 20 et 45%.

Une telle configuration permet à la bague d'étanchéité d'être toujours guidée vers l'intérieur de la chambre, quelle que soit la configuration de l'assemblage, sans fluer au-delà de la chambre ni hors de l'alésage.

Par ailleurs, l'écrou selon l'invention peut comporter une ou plusieurs des caractéristiques suivantes :

- L'écrou étanche comprend un chanfrein entre la paroi de fond de l'alésage et une paroi de la chambre de l'écrou,
- le chanfrein fait un angle avec l'axe de révolution compris entre 45° à 60°,
- la paroi de fond et la face d'extrémité ont des formes complémentaires,
- la paroi de fond et la face d'extrémité comprennent chacun une portion disposée sensiblement perpendiculairement à l'axe de révolution,

- une paroi de l'alésage comprend une gorge s'étendant radialement à l'intérieur de l'embase, et une paroi extérieure de la bague comprend une saillie de forme complémentaire de celle la gorge,
- la bague possède un rayon extérieur supérieur à un rayon intérieur de l'alésage,
- le rapport entre le rayon extérieur de la bague et le rayon intérieur de l'alésage est compris entre 1,010 et 1,016,
- le volume de la bague comparé au volume disponible de l'écrou est compris entre 70% et 85%, ledit volume disponible étant le plus petit volume creux à l'intérieur de l'écrou entre une surface d'appui et un premier filet de l'écrou, à une extrémité du taraudage située du côté de l'embase, une fois une vis placée dans l'écrou, lorsque la vis occupe un volume maximal.

L'invention sera mieux comprise à la lecture de la description qui suit, en lien avec les dessins illustrant à titre d'exemple des modes de réalisation de l'invention.

La figure 1 (déjà décrite) est une coupe d'un écrou à chambre de l'art antérieur,

La figure 2 (déjà décrite) est une coupe d'un écrou étanche de l'art antérieur,

La figure 3 (déjà décrite) est une vue en coupe partielle d'un assemblage comprenant une vis et un écrou étanche de l'art antérieur,

La figure 4 est une vue de côté d'un écrou étanche selon un mode de réalisation de l'invention,

La figure 5 est une coupe éclatée de l'écrou étanche de la figure 4,

La figure 6 est une coupe d'un écrou étanche selon un deuxième mode de réalisation,

La figure 7 une vue en coupe partielle d'un assemblage comprenant une vis et un écrou étanche selon un mode de réalisation de l'invention,

La figure 8 est une coupe d'un écrou étanche selon un troisième mode de réalisation.

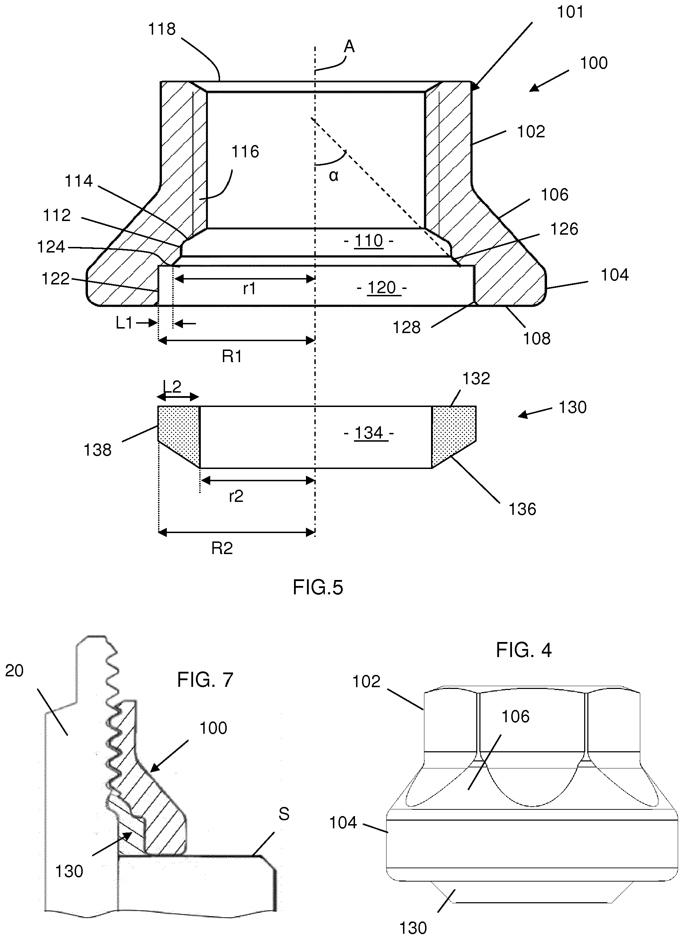

Un écrou étanche 100, représenté en figure 4 et 5, comprend un écrou 101 et une bague d'étanchéité 130. L'écrou 101 s'étend dans la direction d'un axe de révolution A dudit écrou et comprend une prise de clé 102 et une embase 104. La prise de clé 102 est ici un hexagone. L'embase, de diamètre extérieur élargi par rapport à la plus grande dimension de l'hexagone, a une surface supérieure tronconique 106 qui comporte six pans en creux par rapport à cette surface tronconique, comme ceux décrits dans la demande de brevet FR 2937386 au nom de la demanderesse. Chaque pan en creux est aligné avec une surface plane de la prise de clé hexagonale.

La figure 5 montre plus précisément que l'embase 104 comprend une surface d'appui 108 opposée à la surface tronconique, et une chambre 110, présentant une paroi cylindrique 112 et une paroi d'extrémité 114 reliant la paroi cylindrique 112 et le premier filet du taraudage 116. Dans cet exemple, la paroi d'extrémité 114 est une surface tronconique.

Le taraudage 116 s'étend sur la surface intérieure de l'écrou, entre la fin de la paroi d'extrémité 114 et l'extrémité supérieure 118 de l'écrou, opposée à la surface d'appui 108.

L'embase 104 comprend également un alésage 120 cylindrique réalisé dans la chambre 110, débouchant sur la surface d'appui 108, et présentant un premier rayon intérieur R1 supérieur au rayon de la chambre 110. L'alésage 120 comprend une paroi cylindrique 122 et une paroi de fond 124 plane. Dans cet exemple, la paroi de fond est sensiblement perpendiculaire à l'axe A. On entend par sensiblement que l'angle peut varier de quelques degrés.

Un chanfrein 126 raccorde la paroi de fond 124 de l'alésage 120 à la paroi cylindrique 112 de la chambre 110.

La paroi de fond 124 est une surface annulaire A1 s'étendant entre le premier rayon intérieur R1 de la paroi cylindrique 122, et un deuxième rayon intérieur r1, défini par la distance entre l'axe A et la distance à laquelle le chanfrein 126 coupe la paroi d'extrémité 124. La surface annulaire A1 a pour valeur

$$A1 = (R1^2 - r1^2). \, \pi$$

En deux dimensions, la paroi de fond 124 a une largeur L1 définie par la différence de rayons (R1- r1).
L'alésage 120 est destiné à recevoir une bague d'étanchéité 130. Un chanfrein 128 est réalisé sur le pourtour débouchant de l'alésage afin de guider l'insertion de la bague dans l'alésage.
La bague 130 est une couronne annulaire d'axe de révolution A, comprenant une face d'extrémité supérieure 132 destinée à reposer contre la paroi de fond 124 de l'alésage 120. Préférentiellement, la face d'extrémité supérieure comporte au moins une surface de forme complémentaire de la paroi de fond 124 de l'écrou. Dans l'exemple illustré en figure 3, la surface d'extrémité supérieure 132 est entièrement plane et sensiblement perpendiculaire à l'axe A.
La bague d'étanchéité 130 présente un perçage 134 dont le diamètre, égal à deux fois le rayon intérieur r2 indiqué sur la figure 3, est supérieur au diamètre du fût de la vis afin de ne pas interférer avec les filets et le fût de la vis sur laquelle l'écrou sera vissé. La bague peut être amenée à entrer en contact avec le fût de la vis si une vis de plus grand diamètre dite « oversize » est utilisée dans une opération de maintenance à la place d'une vis de diamètre nominal, mais la fonction de la bague n'est pas de freiner la vis et/ou de limiter l'imperdabilité de l'écrou.

Une face d'extrémité inférieure 136 de la bague d'étanchéité opposée à la face d'extrémité supérieure 132 est tronconique, la paroi du perçage 134 étant plus longue dans la direction axiale A que la paroi extérieure 138 destinée à entrer en contact avec la paroi cylindrique 122 de l'alésage .

Le rayon extérieur R2 de la bague 130 est supérieur au premier rayon intérieur R1 de l'alésage, de sorte que la bague doit être insérée en force dans l'alésage. L'interférence créée permet de maintenir la bague dans l'alésage, notamment pendant son transport, son stockage et pendant l'installation de l'écrou. Préférentiellement, le rapport d'interférence entre le rayon extérieur R2 de la bague et le rayon intérieur R1 de l'alésage est compris entre 1,010 et 1,016. Plus le diamètre nominal - diamètre mesuré en fond de filets - de l'écrou est grand, moins le rapport d'interférence est grand.

La surface d'appui 132 de la bague est également une surface annulaire A2, s'étendant entre le rayon extérieur R2 et le rayon intérieur r2, ayant pour valeur

$$A2 = (R2^2 - r2^2) . \pi$$

En deux dimensions, la surface d'appui 132 de la bague a une largeur L2 définie par la différence de rayons (R2- r2).

Pour éviter tout fluage intempestif de la bague, le rapport entre les largeurs d'appui L1 et L2 doit être supérieur ou égale à 20%, et inférieur ou égale à 45%, soit :

$$20\% \leq L1 / L2 \leq 45\%$$

Cette relation définit le ratio de largeur de contact entre la face d'extrémité 132 supérieure de la bague 130 et la paroi de fond 124 de l'écrou 101 dans un plan sensiblement perpendiculaire à l'axe A.

Si le ratio de largeur de contact entre la bague et l'écrou est inférieur à 20%, la bague risque plutôt de fluer lors de son installation dans la chambre 110 jusque dans les filets du taraudage 116 : le fluage de la bague lors de son insertion dans l'écrou n'est pas maîtrisé. Si de la matière de la bague se trouve dans les filets, le coefficient de frottement entre les filets de la vis et de l'écrou diminuera, la tension dans la vis pourra monter bien au-dessus de la limite admissible, ce qui pourra provoquer la rupture de la vis.

Si le ratio de largeur de contact entre la bague et l'écrou est supérieur à 45%, alors la bague 130 risque plutôt de fluer entre la surface d'appui 108 de l'écrou et la surface de la structure lorsque l'écrou 130 est installé sur une vis. Le risque est également d'induire une tension non maîtrisée dans la vis, à cause de la diminution du coefficient de frottement entre les surfaces en contact.

Le tableau 1 ci-dessous donne des exemples par diamètre des relations entre les largeurs d'appui L1 et L2 d'une gamme d'écrou de différents diamètres testés par le demandeur:

Tableau 1

| Ø nominal écrou | L1 (mm) | L2 (mm) | Ratio |
|---|---|---|---|
| 5 | 0,22 | 1,06 | 21% |
| 6 | 0,24 | 1,09 | 22% |
| 7 | 0,31 | 1,10 | 28% |
| 8 | 0,35 | 0,96 | 36% |
| 10 | 0,37 | 1,11 | 33% |
| 12 | 0,6 | 1,48 | 41% |
| 14 | 0,63 | 1,66 | 38% |
| 16 | 0,41 | 1,96 | 21% |

Comme cela a été décrit précédemment, un chanfrein 126 raccorde la paroi de fond 124 de l'alésage 120 à la paroi cylindrique 112 de la chambre 110. Le chanfrein 126 permet ici de guider la matière vers la chambre 110. Il augmente l'espace disponible dans la chambre sans enlever trop de matière de l'embase afin de garantir l'intégrité de l'embase lorsque celle-ci travaille en compression.

Le chanfrein 126 peut présenter différents angles α mesurés par rapport à l'axe de révolution A selon le diamètre nominal de l'écrou. Le tableau 2 indique par diamètre d'écrou l'angle préférentiel du chanfrein 126.

Tableau 2

| Ø nominal écrou | angle α (°) |
|---|---|
| 5 | 60 |
| 6 | 45 |
| 7 | 45 |
| 8 | 45 |
| 10 | 45 |
| 12 | 45 |
| 14 | 45 |
| 16 | 60 |

Dans certaines configurations, la chambre 110 peut être totalement conique : comme représenté en figure 6, la paroi d'extrémité 114 de la chambre et le chanfrein 126 sont confondus dans une seule et même paroi ayant un seul et même angle. Dans l'exemple de la figure 6, l'angle α est de 60° avec l'axe de révolution A.

Le demandeur a réalisé plusieurs essais d'assemblage, et simulé par éléments finis en deux dimensions ces mêmes assemblages, comprenant chacun une vis dont le diamètre de fût est au maximum de la tolérance, une structure ayant une épaisseur minimale, un écrou dont un volume de la chambre est au minimum de la tolérance, et une bague dont toutes les cotes sont au maximum de la tolérance.

Dans le premier assemblage de l'art antérieur, représenté en figure 3, l'écrou est un écrou de l'art antérieur, avec un ratio de largeur de contact compris entre 78% et 96%. Dans un second assemblage, représenté en figure 7, l'écrou comprend un ratio de largeur de contact compris entre 20% et 45%. Les vis 20 sont identiques dans les deux assemblages comprenant les mêmes épaisseurs de structure.

Comme indiqué précédemment, dans l'assemblage de la figure 3, la matière de la bague 16 ne flue pas entièrement dans la chambre 12 mais flue en partie 22 entre la surface d'appui 14 de l'écrou et la surface S de l'élément à serrer.

Dans l'assemblage de la figure 7 comprenant l'écrou de la figure 5, aucune matière de la bague n'a flué entre l'écrou et la structure, et il n'y a aucun espace entre la paroi de la chambre et le fût de la vis. L'étanchéité est donc meilleure, et le risque de dépasser l'UTS (« Ultimate Tensile Strength ») de la vis est annulé.

Préférentiellement, un volume de la bague 130 constitué par le volume de la matière de la bague 130, comparé au volume disponible de l'écrou 101, est dans une plage comprise entre 70% et 85%. Le volume disponible considéré ici est le plus petit volume creux à l'intérieur de l'écrou 101 entre la surface d'appui 108 et le premier filet du taraudage 116 une fois la vis placée dans l'écrou, lorsque la vis occupe un volume maximal. Par convention, le volume maximal de la vis dans l'espace disponible est calculé comme une hauteur de la chambre 110 entre la surface d'appui 108 et le premier filet du taraudage 116, du côté de ladite chambre, multipliée par une surface d'une section, perpendiculaire à l'axe de révolution A, du fût lisse de la vis. En dessous de 70%, le volume de la bague est trop faible par rapport au volume de la chambre, et l'écrou peut ne plus être étanche. Au dessus de 85%, la bague risque de fluer au-delà de la chambre vers les filets ou sous l'embase et compromettre l'intégrité de l'écrou lors de sa pose.

L'écrou est préférentiellement en alliage de titane, et la bague est par exemple en PTFE (aussi vendue sous la marque Teflon™, de la société Dupont de Nemours), afin de garder un écrou léger. Bien sûr, l'écrou et la bague peuvent être réalisés dans une autre matière si le poids n'est pas un critère majeur.

La prise de clé comporte de manière connue un moyen de freinage, comme une déformation elliptique ou une déformation en trois points du taraudage, réalisé sur une surface extérieure de l'écrou proche de l'extrémité supérieure 118. Si l'écrou est en alliage de titane, le freinage sera préférentiellement réalisé selon le procédé décrit dans le brevet FR2947597 au nom de la demanderesse.

L'invention n'est pas limitée au seul exemple décrit ci-dessus. Ainsi, l'écrou peut comporter une embase tronconique sans creux par rapport à la surface supérieure tronconique.

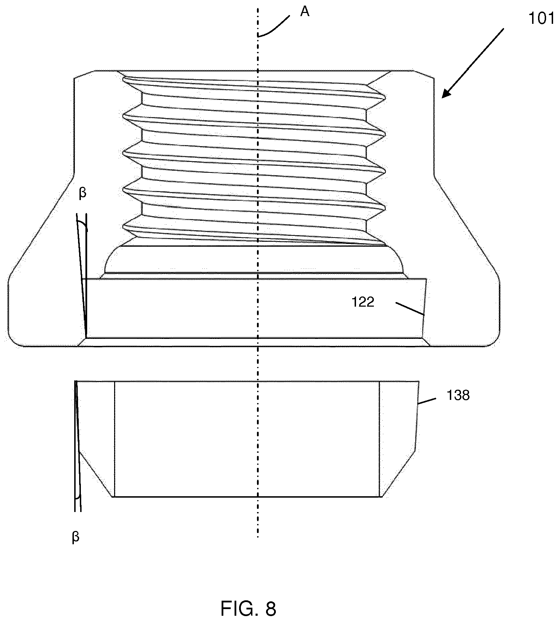

La paroi de l'alésage 120 peut être conique, avec un angle β compris entre 2° et 5° et s'ouvrant depuis la surface d'appui 108 vers la paroi de fond 124, entre la paroi 122 et l'axe A de l'écrou 101, afin d'améliorer le maintien de la bague 130 dans l'alésage, notamment à basse température (figure 8). La bague 130 présente elle-même le même angle β compris entre 2° et 5°, entre la paroi extérieure 138 et l'axe A. Au-delà d'un angle de 5°, la bague ne peut plus être insérée dans l'alésage 120 conique. En dessous de 2°, la différence d'angle n'est pas suffisante pour améliorer le maintien de la bague par rapport à une paroi cylindrique. Le rapport d'interférence entre un rayon extérieur R2 de la bague et un rayon R1 de l'alésage, lesdits rayons étant positionnés à la même distance axiale à partir respectivement de la paroi de fond 124 et de la surface d'extrémité supérieure 132, est également compris entre 1,010 et 1,016.

Une autre surface que le chanfrein 126 peut être adoptée pour relier la paroi d'extrémité 124 de l'alésage et la paroi cylindrique 112 de la chambre, comme par exemple une surface rayonnée ou multi-rayonnée.

De même, la paroi de fond de la chambre peut être conique, ou peut comprendre depuis la paroi cylindrique de l'alésage une portion conique puis une portion perpendiculaire à l'axe de révolution A. Dans ces cas, la face d'extrémité de la bague qui est en contact avec la paroi de fond sera respectivement conique, ou comprendra une portion conique complémentaire de celle de la paroi de fond, et une portion perpendiculaire à l'axe de révolution. Les mesures des largeurs L1 et L2 peuvent être soit effectuées dans la direction angulaire, soit projetées sur une direction sensiblement perpendiculaire à l'axe de révolution. Les deux surfaces ayant le même angle par rapport à l'axe de révolution, le rapport des deux largeurs projetées sera égal au rapport des largeurs mesurées dans la direction angulaire.

Dans une autre variante, l'alésage peut comprendre une gorge s'étendant radialement à l'intérieur de la paroi 122 de l'alésage - que la paroi soit cylindrique ou conique -, de rayon supérieur au rayon R1 de l'alésage. La bague peut comprendre une saillie s'étendant radialement à l'extérieur de la paroi 138, de formes et dimensions complémentaires à celle de la gorge, c'est-à-dire permettant l'engagement de ladite saillie dans ladite gorge. L'ensemble gorge / saillie permet d'améliorer le maintien de la bague dans l'écrou. Dans ce cas, les dimensions supplémentaires des gorges et saillies ne sont pas prises en compte pour les mesures des longueurs L1 et L2. Les gorges et saillies peuvent être circulaires, ou ne s'étendre que partiellement sur la périphérie de l'alésage et de la bague.

## Revendications

**1.** Ecrou étanche (100) comportant un écrou (101) et une bague d'étanchéité (130) déformable, l'écrou comportant un corps annulaire s'étendant dans une direction d'un axe de révolution (A), une embase (104) comportant une chambre (110) et un alésage (120) réalisé dans ladite embase, l'alésage (120) comprenant une paroi de fond (124) annulaire ayant une largeur s'étendant entre un premier rayon (R1) intérieur et un deuxième rayon (r1) intérieur, la bague d'étanchéité (130) comprenant un corps annulaire et une face d'extrémité supérieure (132) apte à reposer contre la paroi de fond (124) de l'alésage, ladite face d'extrémité supérieure ayant une largeur s'étendant entre un rayon intérieur (r2) et un rayon extérieur (R2), **caractérisé en ce que** le rapport de la largeur (L1) de la paroi de fond (124) de l'alésage et la largeur (L2) de la face d'extrémité supérieure (132) de la bague est compris entre 20% et 45%.

**2.** Ecrou étanche selon la revendication 1, dans lequel l'écrou (100) comporte un chanfrein (126) entre la paroi de fond (124) de l'alésage et une paroi de la chambre (110) dudit écrou.

**3.** Ecrou étanche selon la revendication 2, dans lequel le chanfrein (126) fait un angle ($\alpha$) avec l'axe de révolution (A) compris entre 45° à 60°.

**4.** Ecrou étanche selon l'une des revendications 1 à 3, tel que la paroi de fond (124) de l'alésage et la face d'extrémité supérieure (132) de la bague ont des formes complémentaires.

**5.** Ecrou étanche selon la revendication 4, tel que la paroi de fond (124) et la face d'extrémité supérieure (132) comprennent chacun une portion disposée sensiblement perpendiculairement à l'axe de révolution (A).

**6.** Ecrou étanche selon l'une des revendications 1 à 5, tel que la bague (130) possède un rayon extérieur (R2) supérieur à un premier rayon intérieur (R1) de l'alésage.

**7.** Ecrou étanche selon la revendication 6 tel qu'un rapport entre le rayon extérieur (R2) de la bague et le premier rayon intérieur (R1) de l'alésage est compris entre 1,010 et 1,016.

**8.** Ecrou étanche selon l'une des revendications 1 à 7, tel qu'une paroi (122) de l'alésage (120) comprend une gorge s'étendant radialement à l'intérieur de l'embase (104), et une paroi extérieure (138) de la bague (130) comprend une saillie de forme complémentaire de celle ladite gorge.

**9.** Ecrou étanche selon l'une des revendications 1 à 8, tel qu'un volume de la bague (130) est compris entre 70% et 85% d'un volume disponible de l'écrou (101), ledit volume disponible étant le plus petit volume creux à l'intérieur de l'écrou entre une surface d'appui (108) et un premier filet dudit écrou, à une extrémité d'un taraudage (116) située du côté de l'embase (104), une fois une vis placée dans l'écrou, lorsque la vis occupe un volume maximal.

## Patentansprüche

**1.** Dichte Schraubenmutter (100), die eine Schraubenmutter (101) und einen verformbaren Dichtungsring (130) aufweist, wobei die Schraubenmutter einen ringförmigen Korpus aufweist, der sich in eine Richtung einer Rotationsachse (A) erstreckt, eine Basis (104), die eine Kammer (110) und eine Bohrung (120) aufweist, die in der Basis realisiert ist, wobei die Bohrung (120) eine ringförmige Bodenwand (124) umfasst, die eine Breite vorweist, die sich zwischen einem ersten Innenradius (R1) und einem zweiten Innenradius (r1) erstreckt, wobei der Dichtungsring (130) einen ringförmigen Korpus und eine obere Abschlussfläche (132) umfasst, die imstande ist, an der Bodenwand (124) der Bohrung aufzuliegen, wobei die obere Abschlussfläche eine Breite vorweist, die sich zwischen einem Innenradius (r2) und einem Außenradius (R2) erstreckt, **dadurch gekennzeichnet, dass** das Verhältnis der Breite (L1) der Bodenwand (124) der Bohrung und der Breite (L2) der oberen Abschlussfläche (132) des Ringes zwischen 20% und 45% enthalten ist.

**2.** Dichte Schraubenmutter nach Anspruch 1, wobei die Schraubenmutter (100) eine Fase (126) zwischen der Bodenwand (124) der Bohrung und einer Wand der Kammer (110) der Schraubenmutter aufweist.

**3.** Dichte Schraubenmutter nach Anspruch 2, wobei die Fase (126) mit der Rotationsachse (A) einen Winkel ($\alpha$) zwischen 45° und 60° einschlägt.

**4.** Dichte Schraubenmutter nach einem der Ansprüche 1 bis 3, sodass die Bodenwand (124) der Bohrung und die obere Abschlussfläche (132) des Rings ergänzende Formen aufweisen.

**5.** Dichte Schraubenmutter nach Anspruch 4, sodass die Bodenwand (124) der Bohrung und die obere Abschlussfläche (132) jeweils einen Abschnitt umfassen, der im Wesentlichen senkrecht zur Rotationsachse (A) angeordnet ist.

**6.** Dichte Schraubenmutter nach einem der Ansprüche 1 bis 5, sodass der Ring (130) einen Außenradius (R2) besitzt, der größer als ein erster Innenradius (R1) der Bohrung ist.

**7.** Dichte Schraubenmutter nach Anspruch 6, sodass ein Verhältnis zwischen dem Außenradius (R2) des Rings und dem ersten Innenradius (R1) der Bohrung zwischen 1,010 und 1,016 enthalten ist.

**8.** Dichte Schraubenmutter nach einem der Ansprüche 1 bis 7, sodass eine Wand (122) der Bohrung (120) eine Nut umfasst, die sich radial im Inneren der Basis (104) erstreckt, und eine Außenwand (138) des Rings (130) einen Vorsprung in ergänzender Form zu jener der Nut umfasst.

**9.** Dichte Schraubenmutter nach einem der Ansprüche 1 bis 8, sodass ein Volumen des Rings (130) zwischen 70% und 85% eines verfügbaren Volumens der Schraubenmutter (101) enthalten ist, wobei das verfügbare Volumen das kleinste Hohlvolumen im Inneren der Schraubenmutter zwischen einer Anlagefläche (108) und einem ersten Gewinde der Schraubenmutter ist, an einem Abschluss eines Innengewindes (116), das sich auf Seiten der Basis (104) befindet, sobald eine Schraube in der Schraubenmutter platziert wird, wenn die Schraube ein maximales Volumen einnimmt.

**Claims**

**1.** Sealing nut (100) comprising a nut (101) and a deformable sealing ring (130), the nut comprising an annular body extending in a direction of an axis of revolution (A), a base (104) comprising a chamber (110) and a bore (120) made in said base, with the bore (120) comprising an annular bottom wall (124) having a width extending between a first inner radius (R1) and a second inner radius (rl), with the sealing ring (130) comprising an annular body and an upper end face (132) able to rest against the bottom wall (124) of the bore, said upper end face having a width extending between an inner radius (r2) and an outer radius (R2), **characterised in that** the ratio of the width (L1) of the bottom wall (124) of the bore and the width (L2) of the upper end face (132) of the ring is between 20% and 45%.

**2.** Sealing nut according to claim 1, wherein the nut (100) comprises a chamfer (126) between the bottom wall (124) of the bore and a wall of the chamber (110) of said nut.

**3.** Sealing nut according to claim 2, wherein the chamfer (126) forms an angle ($\alpha$) with the axis of revolution (A) between 45° à 60°.

**4.** Sealing nut according to one of claims 1 to 3, such that the bottom wall (124) of the bore and the upper end face (132) of the ring have complementary shapes.

**5.** Sealing nut according to claim 4, such that the bottom wall (124) and the upper end face (132) each comprise a portion arranged substantially perpendicular to the axis of revolution (A).

**6.** Sealing nut according to one of claims 1 to 5, such that the ring (130) has an outer radius (R2) greater than a first inner radius (R1) of the bore.

**7.** Sealing nut according to claim 6 such that a ratio between the outer radius (R2) of the ring and the first inner radius (R1) of the bore is between 1.010 and 1.016.

**8.** Sealing nut according to one of claims 1 to 7, such that a wall (122) of the bore (120) comprises a groove extending radially inside the base (104), and an outer wall (138) of the ring (130) comprises a protrusion with a shape complementary to that of said groove.

**9.** Sealing nut according to one of claims 1 to 8, such that a volume of the ring (130) is between 70% and 85% of an available volume of the nut (101), said available volume being the smallest hollow volume inside the nut between a bearing surface (108) and a first thread of said nut, at an end of a threading (116) located on the side of the base (104), once the screw is placed in the nut, when the screw occupies a maximum volume.

FIG. 1

14

S

12

10

FIG. 2

16

18

12

20

10

FIG. 3

16

22

14

S

A

114, 126

- 110 -

α

FIG. 6

**FIG.5**

**FIG. 7**

**FIG. 4**

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2682615 A
- FR 2937386
- FR 2947597